# EUROPEAN PATENT SPECIFICATION

(11) **EP 4 054 845 B1**
(45) Date of publication and mention of the grant of the patent: **13.03.2024**
(21) Application number: 20823924.4
(22) Date of filing: 05.11.2020
(51) Int. Cl.: B32B 17/10, B32B 1/00, B60J 1/00, C03C 21/00, C03C 17/22

(54) **LAMINATE WITH LOW-E COATING ON THIN CHEMICALLY STRENGTHENED GLASS AND METHOD OF MANUFACTURE**
LAMINAT MIT EMISSIONSARMER BESCHICHTUNG AUF DÜNNEM CHEMISCH VERSTÄRKTEM GLAS UND VERFAHREN ZUR HERSTELLUNG
STRATIFIÉ PRÉSENTANT UN REVÊTEMENT À FAIBLE ÉMISSIVITÉ SUR DU VERRE MINCE RENFORCÉ CHIMIQUEMENT ET PROCÉDÉ DE FABRICATION

(30) Priority: 05.11.2019 US 201962930980 P
(43) Date of publication of application: 14.09.2022
(73) Proprietor: AGP América S.A., Ciudad De Panamá (PA)
(72) Inventor: MANNHEIM ASTETE, Mario Arturo, Cercado de Lima, Lima (PE); WANG, Zhaoyu, Cercado de Lima, Lima (PE); NUÑEZ-REGUEIRO, José, Cercado de Lima, Lima (PE); CORNEJO, Iván, Cercado de Lima, Lima (PE); MICHETTI, Massimo, Cercado de Lima, Lima (PE); DE OLIVEIRA, Allan, Cercado de Lima, Lima (PE); TEMOCHE, Eduardo D., Cercado de Lima, Lima (PE)
(74) Representative: ABG Intellectual Property Law, S.L.
(86) International application number: PCT/IB2020/060434
(87) International publication number: WO 2021/090243

(56) References cited:
- US-A1- 2016 354 996
- US-B1- 10 730 368

## Description

### Field of the Invention

This invention relates to the field of lightweight coated laminated glazing.

### Background of the Invention

In response to the regulatory requirements for increased automotive fuel efficiency as well as the growing public awareness and demand for environmentally friendly products, automotive original equipment manufacturers, around the world, have been working to improve the efficiency of their vehicles.

One of the key elements of their strategy to improve efficiency has been the concept of light weighting. Often, more traditional, less expensive, conventional materials and processes are being replaced by innovative new materials and processes which while most of the time being more expensive, still offer higher utility than the materials and processes being replaced due to their lower weight and the corresponding increase in fuel efficiency. Sometimes, the new materials and processes bring with them added functionality as well in addition to their lighter weight. Vehicle glazing has been no exception.

The glazed area of vehicles has been steadily increasing and, in the process, displacing other heavier materials. The popular large glass panoramic roofs and windshields are just one example of this trend. A panoramic windshield is a windshield on which the top edge has been substantially extended such that it comprises a portion of the vehicle roof. A panoramic roof is a vehicle roof glazing which comprises a substantial area of the roof over at least a portion of both the front and rear seating areas of the vehicle. A panoramic roof may be comprised of multiple glazings and may be laminated or monolithic.

By reducing the weight of the glazing substantial further improvements can be made in energy consumption. This is especially important for electric vehicles where the improvement directly translates into an increase in the range of the vehicle which is a key consumer concern (range anxiety).

For many years, the standard automotive windshield had a total thickness of 5.4mm. In more recent years, we have seen the thickness decrease to 4.75 mm. While a reduction of 0.65 mm may not seem significant, at a density of 2600 kg per cubic meter for the typical standard soda-lime float glass, each millimeter that the thickness is reduced, decreases the weight by 2.6 kg per square meter. The weight of a typical 1.2 square meter windshield going from 5.4 mm to 4.75 mm is reduced by a little over 2 kg. On a vehicle with a total of 6 square meters of glass, a 1 mm reduction on all the windows translates into a savings of 15.6 kg.

However, there are limits as to how thin the glazing can be using annealed soda-lime glass. Stress under wind load has always been a factor. With the trend towards increasing the size of windshields, wind load is even more of a concern. Glass is also becoming a structural element in more and more vehicles where the glazing now contributes to the stiffness and strength of the car. Fixed glass, once bonded with a relatively soft curing polyurethane, is being mounted with higher modulus adhesives. As a result, the glass, once isolated by rubber gaskets and soft butyl adhesives, is now much more subject to loading from the bumps in the road and vehicle torsion.

Today, windshields with a 2.1 mm outer ply, a 1.6 mm inner ply and a 0.76 mm plastic bonding layer (interlayer) totaling just under 4.5 mm in total thickness are becoming common. This may be close to the limit of what can be done with conventional annealed soda-lime glass.

It has been found that the inner glass layer can be replaced by a much thinner glass layer provided that the glass layer is chemically strengthened. Chemical strengthening increases the strength of glass through the use of an ion exchange process which creates a compression layer on the glass surface, similar to thermal strengthening. An important difference is that extremely thin glass can be chemically strengthened and much higher levels of compression can be achieved by the thermal strengthening process.

A hybrid laminate of a standard outer glass layer in combination with a thin chemically strengthened inner glass layer can result in a laminate that is substantially thinner and lighter than a conventional laminated windshield and which is also, surprisingly, more durable and resistant to breakage.

Another challenge, that automotive designers have faced, has been in heating the cabin of high efficiency internal combustion engine (ICE) and electric vehicles.

The typical ICE powered vehicle is not extremely efficient in turning the energy from the fuel into kinetic energy. Some energy is converted into heat. Managing the waste heat has long been one of the major challenges faced in the design of these vehicles. One of the benefits of this inefficiency is that it provides a ready and essentially free source of power for heating the cabin. The typical ICE vehicle is equipped with an air/coolant fluid heat exchanger having a capacity of 4,000 watts or greater.

As the efficiency of ICE vehicles has increased, some high efficiency small displacement engine vehicles, sold in parts of the world with a frigid climate, include resistive heating elements to provide sufficient cabin heat. Resistive electrical heating is the only viable option for all electric vehicles as the batteries produce very little waste heat.

In electric vehicles cold weather can significantly reduce range due to the demands of the cabin heating system. Therefore, insulating the passenger compartment has become increasingly important, especially as the glazed area of the cabin has increased along with the accompanying thermal losses. This is also important for the comfort of the driver and passengers especially when a cold glass roof is located overhead or other glazing part is in close proximity to exposed skin.

Thermal energy is transferred through glass by means of convective transfer to the air and by being radiated by the glass surface. Emissivity is a measure of how much energy a surface will radiate. Emissivity is quantified as the ratio of heat emitted by an object to that of a perfect black body. Standard clear soda-lime glass has an emissivity of 0.84, radiating 84% for the heat absorbed, making it a very poor insulator. As a result, windows made of soda-lime glass have poor thermal properties. To improve the thermal properties, coatings have been devised which lower the emissivity of the glass surface. These coating, known as low-e (Low Emissivity), greatly reduce the quantity of thermal radiant heat energy emitted. This energy emitted is the major component of the heat transfer of a window. Low-e coatings are known having an emittance as low as 0.04, emitting only 4% the energy and reflecting back 96% of the energy. Reducing the emissivity of the glass surface greatly improves its insulating properties.

Improving the insulation of the cabin reduces the power needed to heat the cabin during cold weather. A low-e coating on the interior glass surfaces is beneficial in this respect. Some large panoramic glass roofs with low-e coating on the interior facing surface of glass have been produced, however these have been fabricated using the conventional thermally bent coated flat glass in standard thicknesses.

Patent application US2015/0070755A1 describes an ITO based low emissivity (Low E) coated glass for solar control and energy saving in automotive glazing. Patent US8524337B2 describes an alternative ITO based coating layer stack on glass for anticondensation application in IG units, VIG units, refrigerators/freezers, vehicle windows or windshields. Patent application US2016/0354996A1 discloses a laminated glazing featuring a low emissivity (Low E) coating on the second surface of the outer glass layer.

While combining lightweight glazing with low-e coatings would be desirable, options have been limited. Low-e coated glass cannot be subsequently chemically strengthened and a chemically strengthened glass cannot be thermally formed. On the other hand a previously thermally formed bent glass cannot be efficiently coated with a low-e coating.

As a result, we have not seen any thin lightweight laminates with chemically strengthened glass and a low-e coating on the interior facing surface of glass. Such a combination would be of great value.

### Brief Summary of the Invention

This invention overcomes these limitations by applying the low-e coating after the flat glass has been chemically strengthened and then by cold bending the flat coated glass to its final shape.

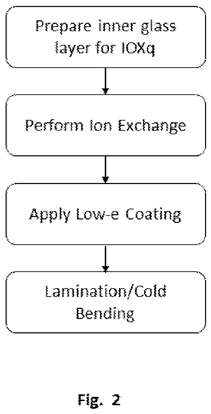

The essential steps of the method for producing such a laminate are shown in Figure 2. The method is reduced to the essential steps that must be performed and in the required sequence. Non-essential and optional steps are not illustrated. Steps that are common to any method for producing a laminate and not unique to the claimed method are also not included. These include but are not limited to cutting, grinding, drilling, seaming, printing and washing. The steps must be performed in sequence, but other steps, not shown, may be inserted in between the steps shown.

A variety of means can be used to produce the outer glass layer and are not shown in Figure 2. Any convenient method know in the art may be employed and thus these steps are not included or claimed. The flat glass for the outer glass layer is typically cut to size, edge work is performed and then the flat glass is washed to remove cutting oil, debris and contaminants.

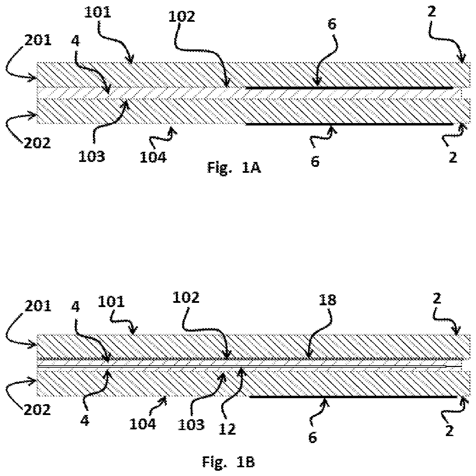

Typically, an obscuration will be required. It is most common to print a black frit on the number two surface 102 of the outer glass layer 201 (as shown in Figure 1A). The glass will then be thermally bent. The outer glass 201 may be annealed, thermally strengthened or chemically strengthened.

A printed obscuration will block the ion exchange process, therefore, if an obscuration is needed on the inner glass layer 202, it must be applied after the ion exchange process. The obscuration, depending upon the method used, may be applied before or after the low-e coating is applied.

A typical substrate for the inner glass layer is an alumina-silicate glass with a thickness of less than or equal to 1.0 mm. This type of glass can be chemically strengthened to very high levels of surface compression. Soda-lime and other types of glass, in thicknesses of less than or equal to 1.0 mm may also be used.

The method of production is as follows.
1. The inner glass layer 202 is processed and prepared for the ion exchange chemical strengthening process.
2. The inner glass layer 202 is chemically strengthened.
3. The chemically strengthened glass is coated with a low-e coating on the interior facing surface four 104 of the inner glass 202.
4. After chemically strengthening, the flat inner glass 202 is assembled with the other layers of the laminate and cold bent to its final shape during the lamination process.

Note that the invention must have at least two glass layers but may have more than two without departing from the intent of the invention.

An additional and optional step is to apply other coatings in addition to the low-e coating. These include but are not limited to an anti-fingerprint (AF) and/or an anti-reflective (AR) coating. These coatings may be applied while the low-e is being applied and/or afterwards prior to or during lamination depending upon the type of coating.

Through means of this method a thin lightweight laminate is produced which has excellent thermal properties resulting from the application of the low-e coating to the interior surface.

Benefits:
- Lighter weight
- Increased comfort
- Excellent thermal properties
- Improved efficiency
- Improved range
- Less energy needed to heat and cool the interior.
- Can be combined with other coating on the number two surface.
- Can be combined with performance films and interlayers.
- Can be combined with anti-fingerprint coatings.
- Can be combined with anti-glare coatings.
- Can be combined with infra-red reflecting coatings.
- Can be combined with performance films.
- Can be combined with performance interlayers.

### Brief Description of the Several Views of the Drawings

| | |
|---|---|
| 1A | Cross Section: Typical Laminated Automotive Glazing |
| 1B | Cross Section: Typical Laminated Automotive Glazing With Performance Film And Coating |
| 2 | The Steps of The Method |
| 3 | Exploded View Of The Laminate Produced By The Method. |
| 4 | Cross Section of The Coating. |

**Reference Numerals of Drawings**

| | |
|---|---|
| 2 | Glass |
| 4 | Bonding/Adhesive Layer (interlayer) |
| 6 | Obscuration |
| 12 | Film |
| 18 | IR Reflecting Coating |
| 19 | Coating (Low-e, AR, AF) |
| 21 | Layer 1 |
| 22 | Layer 2 |
| 23 | Layer 3 |
| 24 | Layer 4 |
| 25 | Layer 5 |
| 26 | Layer 6 |
| 27 | Layer 7 |
| 32 | Glass Chemically tempered |
| 44 | Conductive film |
| 44 | Film |
| 101 | Surface one |
| 102 | Surface two |
| 103 | Surface three |
| 104 | Surface four |
| 201 | Outer layer |
| 202 | Inner layer |

### Detailed Description of the Invention

The following terminology is used to describe the laminated glazing of the invention.

A glazing is an article comprised of at least one layer of a transparent material which serves to provide for the transmission of light and/or to provide for viewing of the side opposite the viewer and which is mounted in an opening in a building, vehicle, wall or roof or other framing member or enclosure.

Typical automotive laminated glazing cross sections are illustrated in Figures 1A and 1B. A laminate is comprised of two layers of glass 2, the exterior or outer 201 and the interior or inner 202 that are permanently bonded together by a plastic layer 4 (interlayer). In a laminate, the glass surface that is on the exterior of the vehicle is referred to as surface one 101 or the number one surface. The opposite face of the exterior glass layer 201 is surface two 102 or the number two surface. The glass 2 surface that is on the interior of the vehicle is referred to as surface four 104 or the number four surface. The opposite face of the interior layer of glass 202 is surface three 103 or the number three surface. Surfaces two 102 and three 103 are bonded together by the plastic layer 4. An obscuration 6 may be also applied to the glass. Obscurations are commonly comprised of black enamel frit printed on either the number two 102 or number four surface 104 or on both. The laminate may have a coating 18 on one or more of the surfaces. The laminate may also comprise a film 12 laminated between at least two plastic layers 4.

The term "glass" can be applied to many organic and inorganic materials, include many that are not transparent. For this document we will only be referring to nonorganic transparent glass. From a scientific standpoint, glass is defined as a state of matter comprising a non-crystalline amorphous solid that lacks the ordered molecular structure of true solids. Glasses have the mechanical rigidity of crystals with the random structure of liquids.

Glass is formed by mixing various substances together and then heating to a temperature where they melt and fully dissolve in each other, forming a miscible homogeneous fluid.

The types of glass that may be used include but are not limited to: the common soda-lime variety typical of automotive glazing as well as aluminosilicate, lithium aluminosilicate, borosilicate, glass ceramics, and the various other inorganic solid amorphous compositions which undergo a glass transition and are classified as glass included those that are not transparent. The glass layers may be comprised of heat absorbing glass compositions and may also utilize infrared reflecting and other types of coatings.

Most of the glass used for containers and windows is soda-lime glass. Soda-lime glass is made from sodium carbonate (soda), lime (calcium carbonate), dolomite, silicon dioxide (silica), aluminum oxide (alumina), and small quantities of substances added to alter the color and other properties.

Borosilicate glass is a type of glass that contains boric oxide. It has a low coefficient of thermal expansion and a high resistance to corrosive chemical. It is commonly used to make light bulbs, laboratory glassware, and cooking utensils.

Aluminosilicate glass is made with aluminum oxide. It is even more resistant to chemicals than borosilicate glass and it can withstand higher temperatures. Chemically strengthened Aluminosilicate glass is widely used for displays on smart phones and other electronic devices.

Lithium-Aluminosilicate is a glass ceramic that has very low thermal expansion, and high optical transparency. It typically contains 3 -6 % Li2O. It is commonly used for fireplace windows, cooktop panels, lenses and other applications that require low thermal expansion.

The glass layers may be annealed or strengthened. There are two processes that can be used to increase the strength of glass. They are thermal strengthening, in which the hot glass is rapidly cooled (quenched) and chemical strengthening which achieves the same effect through an ion exchange chemical treatment.

Heat strengthened, full temper soda-lime float glass, with a compressive strength in the range of at least 70 MPa, can be used in all vehicle positions other than the windshield. Heat strengthened glass has a layer of high compression on the outside surfaces of the glass, balanced by tension on the inside of the glass which is produced by the rapid cooling of the hot softened glass. When strengthened glass breaks, the tension and compression are no longer in balance and the glass breaks into small beads with dull edges. Strengthened glass is much stronger than annealed laminated glass. The thickness limits of the typical automotive heat strengthening process are in the 3.2mm to 3.6 mm range. This is due to the rapid heat transfer that is required. It is not possible to achieve the high surface compression needed with thinner glass using the typical blower type low pressure air quenching systems.

In the chemical strengthening process, ions in and near the outside surface of the glass are exchanged with ions that are larger. This places the outer layer of glass in compression. Compressive strengths of up to 1,000 MPa are possible. The typical methods involved submerging the glass in a tank of molten salt where the ion exchange takes place. The glass surface must not have any paint or coatings that will interfere with the ion exchange process.

A wide range of coatings, used to enhance the performance and properties of glass, are available and in common use. These include but are not limited to: low emissivity, infra-red reflecting, anti-reflective, hydrophobic, hydrophilic, self-healing, self-cleaning, antibacterial, anti-scratch, anti-graffiti, anti-fingerprint and anti-glare.

Methods of coating application include Magnetron Sputtered Vacuum Deposition (MSVD) as well as others known in the art that are applied via pyrolytic, spray, controlled vapor deposition (CVD), dip, sol-gel and other methods.

The glass layers are formed using gravity bending, press bending, cold bending or any other conventional means known in the art. In the gravity bending process, the glass flat is supported near the edge of glass and then heated. The hot glass sags to the desired shape under the force of gravity. With press bending, the flat glass is heated and then bent on a full of partial surface mold. Air pressure and vacuum are often used to assist the bending process. Gravity and press bending methods for forming glass are well known in the art and will not be discussed in detail in the present disclosure.

Cold bending is a relatively new technology. As the name suggest, the glass is bent while cold to its final shape, without the use of heat. On parts with minimal curvature a flat sheet of glass can be bent cold to the contour of the part. This is possible because as the thickness of glass decreases, the sheets become increasingly more flexible and can be bent without inducing stress levels high enough to significantly increase the long-term probability of breakage. Thin sheets of annealed soda-lime glass, in thicknesses of about 1 mm, can be bent to large radii cylindrical shapes (greater than 6 m). When the glass is chemically, or heat strengthened the glass can endure much higher levels of stress and can be bent along both major axes. The process is primarily used to bend chemically strengthened thin glass sheets (<=1 mm) to shape.

Cylindrical shapes can be formed with a radius in one direction of less than 4 meters. Shapes with compound bend, that is curvature in the direction of both principle axis can be formed with a radius of curvature in each direction as small as approximately 8 meters. Of course, much depends upon the surface area of the parts and the types and thicknesses of the substrates.

The cold bent glass will remain in tension and tend to distort the shape of the bent layer that it is bonded to. Therefore, the bent layer must be compensated to offset the tension. For more complex shapes with a high level of curvature, the flat glass may need to be partially thermally bent prior to cold bending.

The glass to be cold bent is placed with a bent to shape layer and with a bonding layer placed between the glass to be cold bent and the bent glass layer. The assembly is placed in what is known as a vacuum bag. The vacuum bag is an airtight set of plastic sheets, enclosing the assembly and bonded together it the edges, which allows for the air to be evacuated from the assembly and which also applies pressure on the assembly forcing the layers into contact. The assembly, in the evacuated vacuum bag, is then heated to seal the assembly. The assembly is next placed into an autoclave which heats the assembly and applies high pressure. This completes the cold bending process as the flat glass at this point has conformed to the shape of the bent layer and is permanently affixed. The cold bending process is very similar to a standard vacuum bag/autoclave process, well known in the art, except for having an unbent glass layer added to the stack of glass.

The plastic bonding layer 4 (interlayer) has the primary function of bonding the major faces of adjacent layers to each other. The material selected is typically a clear thermoset plastic.

For automotive use, the most commonly used bonding layer 4 (interlayer) is polyvinyl butyral (PVB). PVB has excellent adhesion to glass and is optically clear once laminated. It is produced by the reaction between polyvinyl alcohol and n-butyraldehyde. PVB is clear and has high adhesion to glass. However, PVB by itselfis too brittle. Plasticizers must be added to make the material flexible and to give it the ability to dissipate energy over a wide range of temperature required for an automobile. Only a small number of plasticizers are used. They are typically linear dicarboxylic esters. Two in common use are di-n-hexyl adipate and tetra-ethylene glycol di-n-heptanoate. A typical automotive PVB interlayer is comprised of 30-40% plasticizer by weight.

In addition to polyvinyl butyl, ionoplast polymers, ethylene vinyl acetate (EVA), cast in place (CIP) liquid resin and thermoplastic polyurethane (TPU) can also be used. Automotive interlayers are made by an extrusion process which has a thickness tolerance and process variation. As a smooth surface tends to stick to the glass, making it difficult to position on the glass and to trap air, the surface of the plastic is normally embossed to facilitate the handling of the plastic sheet and the removal or air (deairing) from the laminate, . This process however contributes to additional variation to the sheet. Standard thicknesses for automotive PVB interlayer are 0.38 mm and 0.76 mm (15 and 30 mil).

Interlayers are available with enhanced capabilities beyond bonding the glass layers together. The invention may include interlayers designed to dampen sound. Such interlayers are comprised whole or in part of a layer of plastic that is softer and more flexible than what is normally used. The interlayer may also be of a type which has solar attenuating properties.

Laminates, in general, are articles comprised of multiple sheets of thin material, relative to their length and width, with each thin sheet having two oppositely disposed major faces and typically of relatively uniform thickness, which are permanently bonded to one and other across at least one major face of each sheet.

Laminated safety glass is made by bonding two sheets (201 & 202) of annealed glass 2 together using a plastic bonding layer comprised of a thin sheet of transparent thermoplastic 4 (interlayer) as shown in Figure 1.

Annealed glass is glass that has been slowly cooled from the bending temperature down through the glass transition range. This process relieves any stress left in the glass from the bending process. Annealed glass breaks into large shards with sharp edges. When laminated glass breaks, the shards of broken glass are held together, much like the pieces of a jigsaw puzzle, by the plastic layer helping to maintain the structural integrity of the glass. A vehicle with a broken windshield can still be operated. The plastic layer 4 also helps to prevent penetration by objects striking the laminate from the exterior and in the event of a crash occupant retention is improved. A wide variety of films are available that can be incorporated into a laminate. The uses for these films include but are not limited to: solar control, variable light transmission, increased stiffness, increased structural integrity, improved penetration resistance, improved occupant retention, providing a barrier, tint, providing a sunshade, color correction, and as a substrate for functional and aesthetic graphics. The term "film" shall include these as well as other products that may be developed or which are currently available which enhance the performance, function, aesthetics or cost of a laminated glazing. Most films do not have adhesive properties. To incorporate into a laminate, sheets of plastic interlayer are needed on each side of the film to bond the film to the other layers of the laminate.

Automotive glazing often makes use of heat absorbing glass compositions to reduce the solar load on the vehicle. While a heat absorbing window can be very effective the glass will heat up and transfer energy to the passenger compartment through convective transfer and radiation. A more efficient method is to reflect the heat back to the atmosphere allowing the glass to stay cooler. This is done using various infrared reflecting films and coatings. Infrared coatings and films are generally too soft to be mounted or applied to a glass surface exposed to the elements. Instead, they must be fabricated as one of the internal layers of a laminated product to prevent damage and degradation of the film or coating.

One of the big advantages of a laminated window over a strengthened monolithic glazing is that a laminate can make use of infrared reflecting coatings and films in addition to heat absorbing compositions and interlayers.

Infrared reflecting coatings 18 include but are not limited to the various metal/dielectric layered coatings applied though Magnetron Sputtered Vacuum Deposition (MSVD) as well as others known in the art that are applied via pyrolytic, spray, controlled vapor deposition (CVD), dip and other methods.

Infrared reflecting films include both metallic coated plastic substrates as well as organic based non-metallic optical films which reflect in the infrared. Most of the infrared reflecting films are comprised of a plastic film substrate having an infrared reflecting layered metallic coating applied.

The black frit print obscuration on many automotive glazings serves both a functional and an aesthetic role. The substantially opaque black print on the glass serves to protect the poly-urethane adhesive used to bond the glass to the vehicle from ultra-violet light and the degradation that it can cause. It also serves to hide the adhesive from view from the exterior of the vehicle. The black obscuration must be durable, lasting the life of the vehicle under all exposure and weather conditions. Part of the aesthetic requirement is that the black has a dark glossy appearance and a consistent appearance from part to part and over the time. A part produced today must match up with one that was produced and in service 20 years ago. The parts must also match up with the other parts in the vehicle which may not have been fabricated by the same manufacturer or with the same formulation of frit. Standard automotive black enamel inks (frits) have been developed that can meet these requirements.

Other means are sometimes used to provide an obscuration when a black frit is not practical as is the case when the substrate will be chemically strengthened, or the surface has been coated with a coating that is not compatible with the printing process. These include but are not limited to organic inks, primers and inserts.

Thermal energy is transferred through glass by means of convective transfer or by being radiated by the glass surface. Emissivity is a measure of how much energy a surface will radiate. Emissivity is quantified as the ratio of heat emitted by an object to that of a perfect black body. The ratio of a perfect black body is 1 while the ratio of a perfect reflector is zero. Standard clear soda-lime glass has an emissivity of 0.84, radiating 84% for the heat absorbed, making it a poor insulator. As a result, windows made of soda-lime glass have poor thermal properties. To improve the thermal properties, coatings have been devised which lower the emissivity of the glass surface. These coating, known as low-e, greatly reduce the quantity of thermal radiant heat energy emitted. This energy emitted a major component of the heat transfer of a window. Reducing the emissivity of the glass surface greatly improves its insulating properties. Low-e coatings are known having an emittance as low as 0.04, emitting only 4% the energy and reflecting back 96% of the energy. Low-e coating often have the property of reflecting in the infra-red on the substrate side of the coating further improving the thermal properties by reducing energy transfer from outside. A desirable characteristic when we are trying to cool the interior.

While a number of methods may be employed to apply the low-e coating of the invention, a magnetron sputtering vacuum deposition (MSVD) coater using bipolar pulsed DC power supply has been found to produce coating films with better uniformity and higher conductivity.

Some types of low-e coatings are enhanced though the process of thermal activation. During this process, the coated substrate is heated to temperature and held for a duration sufficient to allow certain changes to take place in the coating which further improve the thermal properties of the coating. This optional step may be included depending upon the type of low-e coating applied.

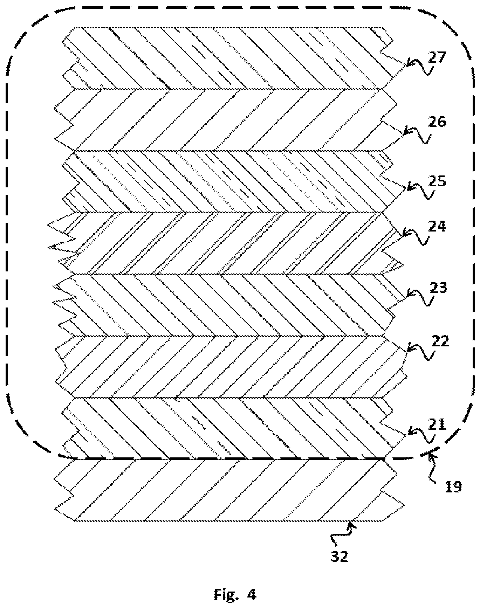

The first layer deposited on the substrate 32 shall be referred to as layer 1. Subsequent layers shall be incremented by 1. The order is shown in Figure 4. The glass substrate 32 is shown with a five-layer coating stack 19.

Note that in chemical formulas, an exact number will be used for any subscript where a specific compound is required. The use of a variable, such as x or y, indicates that the claimed compound includes all possible values of the variable. If the formula HxO is used, then the compounds HO and H₂O are both claimed. Due to the manner in which MSVD and other coating are deposited, we will typically have multiple compounds formed.

### Description of Embodiments

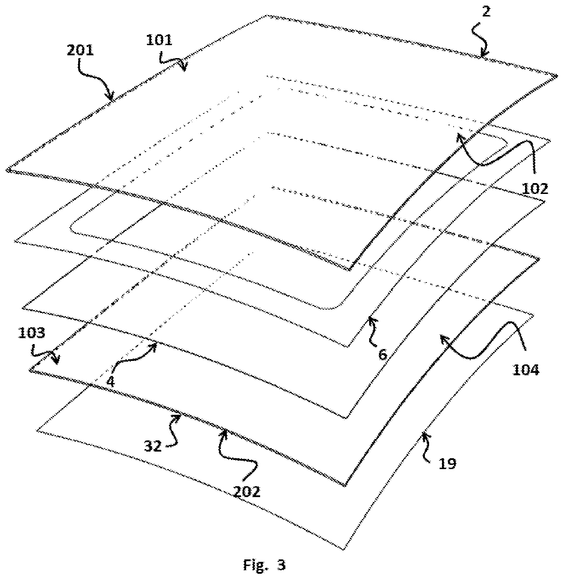

All of the articles produced by the various embodiments of the method described are illustrated by Figures 3 and 4. The laminate shown is a 1.2 meter by 1.6 meter panoramic laminated roof. The outer glass layer 201 is thermally bent 2.1 mm thick, dark solar green, soda-lime glass. A black frit obscuration 6 is printed and fired on surface two 102 of the outer glass layer 201. The inner glass layer 202 is 1.0 mm thick alumina silicate glass which has been chemically strengthened by an ion exchange process. The bent outer glass layer 201 and the flat coated inner glass layer 202 are laminated with an 0.76 mm layer of dark gray tint PVB. The low-e coating is applied to surface four 104 after ion exchange by a magnetron sputter vacuum deposition coater. The total visible light transmission of the laminate is under 5%.

### Embodiment 1

1. In method of embodiment 1 the soda-lime outer glass is cut to size, the edge of the cut glass is diamond wheel ground to a smooth finish and then the glass is washed. A black frit obscuration 6 is then screen printed on surface two 102 of the outer glass layer 201. The glass is then heated and bent to shape, using a full surface press bending process, and annealed.
2. Separately, the inner glass layer 202, a 1.0 mm clear alumina silicate glass, is cut to size by means of a femto-second LASER. No edge work is needed. The cut glass is washed and prepared for the ion exchange process.
3. When a sufficient number of layers have been prepared, they are process by the ion exchange process. Following the ion exchange, the glass is prepared for coating by again washing the glass to remove any remnants of the salt bath.
4. The glass is then passed through an MSVD coater which applies a three-layer low-e coating to what will become surface four 104 of the laminate.

| | |
|---|---|
| Layer 1: SiNx | 21 |
| Layer 2: ITO (Indium Tin Oxide) | 22 |
| Layer 3: SiNx | 23 |

5. The coated glass is now ready for the lamination. A sheet of PVB 4 is placed between the two layers, the bent outer glass layer 201 and the flat inner glass layer 202 are joined together by means of a vacuum channel. The air is evacuated drawing the surfaces together and bending the thin flat inner glass layer 202 to the contour of the outer glass layer 201. Subsequent treatment with heat, vacuum and pressure permanently bond the two layers together.

### Embodiment 2

Embodiment 2 is the same as embodiment 1 with the exception of the low-e coating. The MSVD coating stack is comprised as follows.

| | |
|---|---|
| Layer 1: SiOyNx | 21 |
| Layer 2: ITO (Indium Tin Oxide) | 22 |
| Layer 3: SiOyNx | 23 |

### Embodiment 3

Embodiment 3 is the same as embodiment 1 but with the addition of a two-layer anti-reflective MSVD coating applied over the MSVD low-e coating with the anti-reflective stack comprised as follows.

| | |
|---|---|
| Layer 4: low refractive index | 24 |
| Layer 5: high refractive index | 25 |

### Embodiment 4

Embodiment 4 is the same as embodiment 2 but with the addition of a two-layer anti-reflective MSVD coating applied over the MSVD low-e coating with the anti-reflective stack comprised as follows.

| | |
|---|---|
| Layer 4: low refractive index | 24 |
| Layer 5: high refractive index | 25 |

### Embodiment 5

Embodiment 5 is the same as embodiment 1 but with the addition of a four-layer anti-reflective MSVD coating applied over the MSVD low-e coating with the anti-reflective stack comprised as follows.

| | |
|---|---|
| Layer 4: low refractive index | 24 |
| Layer 5: high refractive index | 25 |
| Layer 6: low refractive index | 26 |
| Layer 7: high refractive index | 27 |

### Embodiment 6

Embodiment 6 is the same as embodiment 2 but with the addition of a four-layer anti-reflective MSVD coating applied over the MSVD low-e coating with the anti-reflective stack comprised as follows.

| | | |
|---|---|---|
| Layer 4: | low refractive index | 24 |
| Layer 5: | high refractive index | 25 |
| Layer 6: | low refractive index | 26 |
| Layer 7: | high refractive index | 27 |

### Embodiment 7

Embodiment 7 is the same as embodiment 1 but with the addition of a three-layer anti-reflective MSVD coating applied over the MSVD low-e coating with the anti-reflective stack comprised as follows.

| | | |
|---|---|---|
| Layer 4: | low refractive index | 24 |
| Layer 5: | high refractive index | 25 |
| Layer 6: | medium refractive index | 26 |

### Embodiment 8

Embodiment 8 is the same as embodiment 2 but with the addition of a three-layer anti-reflective MSVD coating applied over the MSVD low-e coating with the anti-reflective stack comprised as follows.

| | | |
|---|---|---|
| Layer 4: | low refractive index | 24 |
| Layer 5: | high refractive index | 25 |
| Layer 6: | medium refractive index | 26 |

### Embodiments 9-16

The eight embodiments comprising embodiment 9 - 16 are produced by adding the additional step of applying an anti-fingerprint coating to the laminates of embodiments 1 - 8. The anti-fingerprint coating may be applied by an MSVD process or any other method appropriate to the coating.

## Claims

1. An automotive laminated glazing, comprising:
a curved outer glass layer (201) having two oppositely disposed major surfaces, a first surface (101) and a second surface (102);
an inner glass layer (202) having two oppositely disposed major surfaces, a third surface (103) and a fourth surface (104);
wherein the inner glass layer (202) is a chemically strengthened glass layer having no more than 1.0 mm in thickness;
a low-e coating applied on the fourth surface (104) of the inner glass layer (202); and
at least one plastic bonding layer (4) disposed between second (102) and third (103) surfaces;
wherein the inner glass layer (202) has adopted the shape of the outer glass layer (201) when joined together.

2. The automotive laminated glazing of claim 1, wherein the low-e coating is comprised of a three-layer MSVD deposited stack comprising SiNx/ITO/SiNx or SiOxNy/ITO/SiOxNy.

3. The automotive laminated glazing of claim 1, further comprising an anti-reflective coating applied over the low-e coating.

4. The automotive laminated glazing of claim 3, wherein the anti-reflective coating comprises a two-layer MSVD coating, a first layer having a low refractive index and a second layer having a high refractive index.

5. The automotive laminated glazing of claim 3, wherein the anti-reflective coating comprises a three-layer MSVD coating, a first layer having a low refractive index, a second layer having a high refractive index, and a third layer having a medium refractive index.

6. The automotive laminated glazing of claim 3, wherein the anti-reflective coating comprises a four-layer MSVD coating, a first and a third having a low refractive index and a second and a fourth layers having a high refractive index.

7. The automotive laminated glazing of claim 1, further comprising an anti-fingerprint coating applied to the interior facing surface (104).

8. The automotive laminated glazing of claim 3, further comprising an anti-fingerprint coating applied over the anti-reflective coating.

9. The automotive laminated glazing of claim 1, further comprising an infra-red reflecting coating applied on the second surface (102) of the outer glass layer (201)

10. The automotive laminated glazing of claim 1, further comprising an infra-red reflecting film to the laminate.

11. A method for producing an automotive laminate comprising at least two glass layers, the method comprising the steps of:
providing a curved outer glass layer (201) having two oppositely disposed major surfaces, a first surface (101) and a second surface (102);
providing an inner glass layer (202) having two oppositely disposed major surfaces, a third surface (103) and a fourth surface (104), wherein:
i. said layer (202) is of a thickness that it less than or equal to 1.0 mm,
ii. the fourth surface (104) comprises an interior surface of the passenger compartment of the vehicle when installed as a window in a vehicle;
cutting, edging, cleaning and otherwise preparing as needed for ion exchange chemical strengthening said inner glass layer (202);
chemically strengthening by an ion exchange process said inner glass layer (202);
coating said inner glass layer with a low-e coating on the fourth surface (104) that comprises an interior surface of the passenger compartment of the vehicle;
providing at least one plastic bonding layer (4) disposed between second (102) and third (103) surfaces; and
cold bending said strengthened coated inner glass layer (202) to adopt the shape of the outer glass layer (201) during the lamination process.

12. The method of claim 11, comprising the additional step of thermal activation of the coating.

13. The method of claim 11, further comprising the additional step of applying an anti-reflective coating over the low-e coating.

14. The method of claim 11, further comprising the additional step of applying an anti-fingerprint coating to the interior facing surface (104).

15. The method of claim 11, further comprising the step of adding an infra-red reflecting film to the laminate.

## Patentansprüche

1. Verbundverglasung für Kraftfahrzeuge, umfassend:
eine gekrümmte äußere Glasschicht (201) mit zwei einander gegenüberliegenden Hauptflächen, einer ersten Fläche (101) und einer zweiten Fläche (102);
eine innere Glasschicht (202) mit zwei einander gegenüberliegenden Hauptflächen, einer dritten Fläche (103) und einer vierten Fläche (104);
wobei die innere Glasschicht (202) eine chemisch gehärtete Glasschicht mit einer Dicke von nicht mehr als 1,0 mm ist;
eine auf die vierte Oberfläche (104) der inneren Glasschicht (202) aufgebrachte Low-E-Beschichtung; und
wenigstens eine Kunststoff-Verbindungsschicht (4), die zwischen der zweiten (102) und der dritten (103) Oberfläche angeordnet ist;
wobei die innere Glasschicht (202) die Form der äußeren Glasschicht (201) angenommen hat, wenn sie zusammengefügt sind.

2. Verbundverglasung für Kraftfahrzeuge nach Anspruch 1, bei der die Low-E-Beschichtung aus einem dreischichtigen MSVD-abgeschiedenen Stapel besteht, der SiNx/ITO/SiNx oder SiOxNy/ITO/SiOxNy umfasst.

3. Verbundverglasung für Kraftfahrzeuge nach Anspruch 1, weiterhin umfassend eine Antireflexionsbeschichtung, die über der Low-E-Beschichtung aufgebracht ist.

4. Verbundverglasung für Kraftfahrzeuge nach Anspruch 3, bei der die Antireflexionsbeschichtung eine zweischichtige MSVD-Beschichtung umfasst, eine erste Schicht mit einem niedrigen Brechungsindex und eine zweite Schicht mit einem hohen Brechungsindex.

5. Verbundverglasung für Kraftfahrzeuge nach Anspruch 3, bei der die Antireflexionsbeschichtung eine dreischichtige MSVD-Beschichtung umfasst, eine erste Schicht mit einem niedrigen Brechungsindex, eine zweite Schicht mit einem hohen Brechungsindex und eine dritte Schicht mit einem mittleren Brechungsindex.

6. Verbundverglasung für Kraftfahrzeuge nach Anspruch 3, bei der die Antireflexionsbeschichtung eine vierschichtige MSVD-Beschichtung umfasst, wobei eine erste und eine dritte Schicht einen niedrigen Brechungsindex aufweisen und eine zweite und eine vierte Schicht einen hohen Brechungsindex haben.

7. Verbundverglasung für Kraftfahrzeuge nach Anspruch 1, weiterhin umfassend eine Anti-Fingerabdruck-Beschichtung, die auf die nach innen weisende Oberfläche (104) aufgebracht ist.

8. Verbundverglasung für Kraftfahrzeuge nach Anspruch 3, weiterhin umfassend eine Anti-Fingerabdruck-Beschichtung, die über der Antireflexionsbeschichtung aufgebracht ist.

9. Verbundverglasung für Kraftfahrzeuge nach Anspruch 1, weiterhin umfassend eine infrarotreflektierende Beschichtung, die auf der zweiten Oberfläche (102) der äußeren Glasschicht (201) aufgebracht ist.

10. Verbundverglasung für Kraftfahrzeuge nach Anspruch 1, weiterhin umfassend eine infrarotreflektierende Folie auf dem Laminat.

11. Verfahren zum Herstellen eines Kraftfahrzeuglaminats mit wenigstens zwei Glasschichten, wobei das Verfahren die folgenden Schritte umfasst:
Bereitstellen einer gekrümmten äußeren Glasschicht (201) mit zwei einander gegenüberliegenden Hauptflächen, einer ersten Fläche (101) und einer zweiten Fläche (102);
Bereitstellen einer inneren Glasschicht (202) mit zwei gegenüberliegend angeordneten Hauptflächen, einer dritten Fläche (103) und einer vierten Fläche (104), wobei:
i. die Schicht (202) eine Dicke kleiner oder gleich 1,0 mm hat,
ii. die vierte Oberfläche (104) eine Innenfläche des Fahrgastraums des Fahrzeugs umfasst, wenn sie als Fenster in einem Fahrzeug eingebaut ist;
Schneiden, Kantenbearbeiten, Reinigen und anderweitiges Vorbereiten der inneren Glasschicht (202), wie für die chemische Verstärkung durch lonenaustausch erforderlich;
chemisches Verfestigen der inneren Glasschicht (202) durch ein lonenaustauschverfahren;
Beschichten der inneren Glasschicht mit einer Low-E-Beschichtung auf der vierten Oberfläche (104), die eine Innenfläche des Fahrgastraums des Fahrzeugs umfasst;
Bereitstellen wenigstens einer Kunststoffbindeschicht (4), die zwischen der zweiten (102) und der dritten (103) Oberfläche angeordnet wird; und
Kaltbiegen der verstärkten beschichteten inneren Glasschicht (202), um die Form der äußeren Glasschicht (201) während des Laminiervorgangs anzunehmen.

12. Verfahren nach Anspruch 11, umfassend den zusätzlichen Schritt des thermischen Aktivierens der Beschichtung.

13. Verfahren nach Anspruch 11, weiterhin umfassend den zusätzlichen Schritt des Aufbringens einer Antireflexionsschicht über der Low-E-Beschichtung.

14. Verfahren nach Anspruch 11, weiterhin umfassend den zusätzlichen Schritt des Aufbringens einer Anti-Fingerabdruck-Beschichtung auf die nach innen weisende Oberfläche (104).

15. Verfahren nach Anspruch 11, weiterhin umfassend den Schritt des Aufbringens einer infrarotreflektierenden Folie auf das Laminat.

## Revendications

1. Vitrage feuilleté pour automobile, comprenant :
une couche de verre externe incurvée (201) ayant deux surfaces principales disposées de manière opposée, une première surface (101) et une deuxième surface (102) ;
une couche de verre interne (202) ayant deux surfaces principales disposées de manière opposée, une troisième surface (103) et une quatrième surface (104) ;
la couche de verre interne (202) étant une couche de verre renforcée chimiquement n'ayant pas plus de 1,0 mm d'épaisseur ;
un revêtement à faible émissivité, appliqué sur la quatrième surface (104) de la couche de verre interne (202) ; et
au moins une couche de liaison (4) en matière plastique, disposée entre la deuxième (102) et la troisième (103) surfaces ;
la couche de verre interne (202) ayant adopté la forme de la couche de verre externe (201) lorsqu'elles sont assemblées l'une à l'autre.

2. Le vitrage feuilleté pour automobile selon la revendication 1, dans lequel le revêtement à faible émissivité comprend un empilement tricouche MSVD déposé comprenant SiNx/ITO/SiNx ou SiOxNy/ITO/SiOxNy.

3. Le vitrage feuilleté automobile selon la revendication 1, comprenant en outre un revêtement antireflet appliqué sur le revêtement à faible émissivité.

4. Le vitrage feuilleté pour automobile selon la revendication 3, dans lequel le revêtement antireflet comprend un revêtement MSVD bicouche, une première couche ayant un faible indice de réfraction et une deuxième couche ayant un indice de réfraction élevé.

5. Le vitrage feuilleté pour automobile selon la revendication 3, dans lequel le revêtement antireflet comprend un revêtement MSVD tricouche, une première couche ayant un faible indice de réfraction, une deuxième couche ayant un indice de réfraction élevé et une troisième couche ayant un indice de réfraction moyen.

6. Le vitrage feuilleté pour automobile selon la revendication 3, dans lequel le revêtement antireflet comprend un revêtement MSVD à quatre couches, une première et une troisième ayant un faible indice de réfraction et une deuxième et une quatrième couches ayant un indice de réfraction élevé.

7. Le vitrage feuilleté pour automobile selon la revendication 1, comprenant en outre un revêtement anti-traces de doigts appliqué sur la surface tournée vers l'intérieur (104).

8. Le vitrage feuilleté pour automobile selon la revendication 3, comprenant en outre un revêtement anti-traces de doigts appliqué sur le revêtement antireflet.

9. Le vitrage feuilleté pour automobile selon la revendication 1, comprenant en outre un revêtement réfléchissant les infrarouges appliqué sur la deuxième surface (102) de la couche de verre externe (201).

10. Le vitrage feuilleté pour automobile selon la revendication 1, comprenant en outre, sur le feuilletage, un film réfléchissant les infrarouges.

11. Un procédé de réalisation d'un feuilleté pour automobile comprenant au moins deux couches de verre, le procédé comprenant les étapes consistant à :
fournir une couche de verre externe incurvée (201) ayant deux surfaces principales disposées de manière opposée, une première surface (101) et une deuxième surface (102) ;
fournir une couche de verre interne (202) ayant deux surfaces principales disposées de manière opposée, une troisième surface (103) et une quatrième surface (104), dans lequel :
i. ladite couche (202) a une épaisseur inférieure ou égale à 1,0 mm,
ii. la quatrième surface (104) comprend une surface intérieure de l'habitacle du véhicule lorsqu'elle est installée en tant que fenêtre dans un véhicule ;
couper, délimiter, nettoyer et autrement préparer selon les besoins pour le renforcement chimique par échange d'ions de ladite couche de verre interne (202) ;
renforcer chimiquement par un processus d'échange d'ions ladite couche de verre interne (202) ;
revêtir ladite couche de verre interne d'un revêtement à faible émissivité sur la quatrième surface (104) qui comprend une surface intérieure de l'habitacle du véhicule ;
fournir au moins une couche de liaison en plastique (4) disposée entre la deuxième (102) et la troisième (103) surfaces ; et
plier à froid ladite couche de verre interne revêtue renforcée (202) pour adopter la forme de la couche de verre externe (201) pendant le processus de feuilletage.

12. Le procédé selon la revendication 11, comprenant l'étape supplémentaire d'activation thermique du revêtement.

13. Le procédé selon la revendication 11, comprenant en outre l'étape supplémentaire consistant à appliquer un revêtement antireflet sur le revêtement à faible émissivité.

14. Le procédé selon la revendication 11, comprenant en outre l'étape supplémentaire consistant à appliquer un revêtement anti-traces de doigts sur la surface tournée vers l'intérieur (104).

15. Le procédé selon la revendication 11, comprenant en outre l'étape consistant à ajouter un film réfléchissant les infrarouges au feuilletage.
